# EUROPEAN PATENT SPECIFICATION

(11) **EP 1 023 932 B1**
(45) Date of publication and mention of the grant of the patent: **08.06.2011**
(21) Application number: 00300704.4
(22) Date of filing: 31.01.2000
(51) Int. Cl.: B01D 45/12, B04C 5/02, B04C 5/22

(54) **Gas purifying cyclone**
Gasreinigungszyklon
Cyclone de purification de gaz

(30) Priority: 29.01.1999 GB 9902099
(43) Date of publication of application: 02.08.2000
(73) Proprietor: Edwards Limited, Crawley, West Sussex RH10 9LW (GB)
(72) Inventor: Smith, James Robert, Blackford, Somerset BS28 4PA (GB); Clements, Christopher James Philip, Burnham on Sea, North Somerset TA8 1QG (GB)
(74) Representative: Clark, Charles Robert

(56) References cited:
- EP-A- 0 106 429
- EP-A- 0 463 367
- WO-A-90/13360
- DE-A- 2 536 360
- US-A- 3 064 811
- US-A- 4 212 653
- US-A- 4 278 452

## Description

This invention relates to gas cleansing systems, especially exhaust gas streams from semi-conductor processing, and more particularly to such cleansing by means of a cyclone.

Many noxious gases (or vapours) are produced during semi-conductor device processing and the exhaust streams containing such gases generally need to be cleansed of their noxious components prior to any release of the stream to the atmosphere.

Pyrophoric gases used in the semi-conductor industry in particular pose a special risk in that they may result in an uncontrolled pyrophoric reaction inside the pipework or other components including ventilation ducts in semi-conductor processing apparatus. These pyrophoric gases are well known in the semi-conductor field and include silane, disilane, dichlorosilane, trichlorosilane, arsine and phosphine.

In order to minimise the risk of an uncontrolled pyrophoric reaction inside the processing equipment or, in particular, in ventilation ducts, it is known to employ a "burn box" which is designed to lessen a pyrophoric reaction or enable a controlled and contained pyrophoric reaction to occur. Such a burn box is typically 1 to 7m in length and 10cm in diameter and commonly relies on a ventilation duct to draw air through the system. Most burn boxes operate with a laminar air flow to reduce the lower flammability limit and increase separation of resulting particles.

However, burn boxes tend to be bulky and relatively expensive. In addition, laminar air flow presents certain difficulties including the facts that there tends to be incomplete oxidation, especially at higher concentration, which may result in potentially unstable oxide formation and that there may be unnecessary oxidation of a pyrophoric gases.

Particles tend to be produced by the pyrophoric gases in situ generally and in the burn boxes in particular and gravitational sedimentation is a very inefficient method of removing these particles from a gas stream. Smaller particles, for example 20 to 100 *** m in diameter, tend to adhere to the ventilation duct wall and this can reduce the air flow in the duct, thereby increasing the rate of sedimentation blockage inside the duct.

As a result, if the ventilation duct cannot allow the required air flow, a flammable concentration of gas may enter the duct.

Fine powders have a very large surface area to volume ratio and this can assist in the absorption of gas molecules on to the powder. This can have a detrimental effect of changing an otherwise benign powder in to a highly unstable mixture. As only a small percentage of the particles are removed, there is an increased risk of an uncontrolled particle build up inside the system.

Such gas streams in the semi-conductor industry are commonly (but not necessarily) exhausted from an evacuated semi-conductor processing chamber by means of an oil-free or dry mechanical vacuum pump.

A typical oil free or dry pump, i.e. one having an oil free swept volume, is disclosed and described in our British patent Specification No. 2,088,957. The particular pump described therein can comprise a plurality of, for example four, pumping chambers, each containing intermeshing pairs of rotors to effect a pumping action. Some of the chambers, particularly the one at the pump inlet, can have rotors of the 'Roots' type whereas other can have rotors of the 'Claw' type. Shafts for driving the rotor pairs are interconnected by meshing gears enclosed in a housing at one end of the pump casing, one of the shafts extending beyond the housing for connection to a prime mover such as an electric motor. The housing, and the seals relating thereto, are such that oils or lubricants associated with the gears, etc. are prevented from leaking into the pumping chambers.

Oil free, multi-stage mechanical pumps of this type can generally provide a high volumetric pumping efficiency and are normally capable of evacuating an enclosure to a pressure of the order of 10⁻² torr.

The absence of lubricant within the pumping chambers of such pumps makes them more suitable for applications where a dust or particle laden gas has to be pumped from an enclosure. Any such lubricants present in the pumping chamber would act as a "scrubber" for such contaminants and can produce an abrasive slurry effective to induce rapid and excessive wear on the pump internal surfaces.

Dry vacuum pumps are currently employed in many industrial processes including for example, plasma enhanced chemical vapour deposition (PECVD) processes in the semiconductor industry in which exhaust gas streams from a high vacuum process chamber have a high particulate loading.

Although dry pumps can generally evacuate such chambers and handle such particle laden gas stream, there can nonetheless be problems due to blockage of downstream pipework, increased maintenance, fumes and the like. Furthermore, with certain types of particle in the exhaust gas stream, safety hazards may arise due to uncontrolled accumulation of the particles, all as disclosed above, or to the release of particles in to the atmosphere.

It is known to collect particles in a particle collector having an (upper) cylindrical part and a (lower) conical part. For example, the particle collector may comprise a cyclone in which a dust or particle laden gas stream enters cyclone chamber, generally tangentially at one or more points in the cylindrical part, and leaves through a central opening, normally at the top of the chamber. Within the carefully dimensioned chamber, there is set up a helical gas flow from which the particles, by virtue of their inertia and by centrifugal force, will tend to move to the outside of the chamber wall from which they are led downwards, for example by gravitational force, in to a particle receiver usually positioned at the bottom end of the chamber.

A cyclone trap is described in US-A-3 064 811

There are, however, certain problems associated with the recovery and handling of particles collected in this type of way. In particular, when the cyclone is in operation, it is common for dust to build up on the internal walls of the cyclone, for example along the lines of the helical gas flow patterns. This may happen and be particularly serious when the system is treating pyrophoric gases which may self burn in the system and in the cyclone in particular.

The invention is concerned with the provision of a gas stream cleansing system which can generally overcome problems associated with pyrophoric gases in a stream.

In accordance with the invention, there is provided a method for cleansing a noxious gas stream with particles entrained therein, comprising conveying the gas stream to cyclone to separate the gas from the particles, the cyclone comprising a hollow cyclone body having a cylindrical portion and a conical portion, the gas stream entering the cyclone via a cyclone inlet tangentially to the cylindrical portion, and introducing a diluent gas stream to the cyclone via a tube, the tube being set tangentially to the cylindrical portion, and collecting the particles separated from the diluted gas stream by the cyclone; characterised in that the diluent gas stream is of a larger gas flow than the noxious gas stream entering the cyclone and the cyclone is operated , not by the noxious gas stream, but by the generally larger diluent gas flow.

The use of a diluent gas in the cyclone has been found to be useful, in particular to reduce the concentration of pyrophoric gases in the noxious gas stream below their flammability limits. As such, they do not cause safety issues arising from pyrophoric reactions in the cyclone or within the ducting downstream of the cyclone.

One or more noxious gas streams and one or more diluent gas streams may be allowed in to a cyclone. The diluent gas stream(s) may be admixed with the noxious gas stream(s) prior to entry in to the cyclone (but not within the cleansing system as a whole). Preferably one or more, and most preferably all, of the gas streams entering the cyclone chamber do so tangentially advantageously towards the top of the cylindrical portion of the cyclone chamber.

The diluent gas should not be a noxious one, i.e. should be substantially clean, and is preferably air or nitrogen or other inert gas such as argon, etc.

The use of an oxidising diluent gas such as air or oxygen can alternatively be introduced in to the cyclone such that the concentration of the noxious gases in the cyclone is above one or more of their flammability limits. Under the circumstances, the pyrophoric gases are thoroughly mixed with the diluent gas causing oxidation of the pyrophoric gases which, at the correct relative concentration, can be fast and complete. The heat of the reaction can be effectively contained by the choice of strong, usually metal, cyclone components.

It has generally been found - especially in the case of the silanes referred to above and silane itself in particular - that dilution of the noxious gas stream with the diluent gas to a concentration of noxious gas of less than 2% is non-flammable whereas a concentration of noxious gas in the gas stream of 2% or more generally renders if potentially flammable.

The use of a diluent gas stream in accordance with the invention causes the cyclone to be operated, not by the noxious gas stream, but by the generally larger diluent gas flow, thereby allowing the cyclone itself to be sized for a greater overall throughput than previously.

The problems associated with particle residues left by pyrophoric gases in the cyclone in particular are also addressed by the invention.

A liquid or solid cleansing agent may be introduced into the cyclone.

In the case of liquid cleansing agents, these can advantageously include one or more of water, light oils, for example paraffin, benzene, alcohols, for example ethanol, and organic solvents generally. With the cyclone running in use of the vacuum pump system and with the introduction of a stream of the liquid, solids adhering to the walls of the cyclone, together with those in the exhaust stream, are effectively entrained in to the liquid and are dampened by the liquid or form a slurry with the liquid.

The action of the liquid has three principal benefits; firstly it reduces the transfer of particles back towards the vacuum pump, secondly it suppresses reactions which might otherwise occur in finely divided powders, and thirdly it removes particles adhering to the cyclone walls. The resulting dampened particles, solutions or slurries of the particles in the liquid are then easier to arrange for collection, generally in a container beneath the cyclone.

Introduction of the liquid in to the cyclone may be effected in any suitable manner. It can be fed in to the cyclone chamber by a feed pipe and may, if necessary, be under high pressure to ensure particle removal. Preferably the liquid is introduced by a feed pipe in to the cyclone chamber terminating at a central position on the main axis of the chamber, advantageously terminating in a spray jet to ensure an even spread of liquid throughout the cyclone chamber and aided by the exhaust gas flow in the chamber.

In the case of solid cleansing agents, these can advantageously include any suitable dense material, for example glass beads, sand (coarse) or metal and plastic shot. Again with the cyclone running, solid agent introduced in to the cyclone chamber and allowed to rotate around the inner surfaces of the cyclone can dislodge a high proportion of particle/dust accumulator in the cyclone walls. The solid shot together with dislodged powders fall in to the lower section of the cyclone and are collected, for example, in a container held beneath the chamber.

It has been found that imparting a velocity to the solid material and directing it towards or in to the spinning helix (vortex) of the cyclone is preferred for the best results.

In the separate embodiments in which a liquid or solid cleansing agent is employed, it is advantageous for there to be means for the introduction of a diluent gas in to the cyclone chamber for the purpose of imparting extra momentum to the liquid or solid cleansing agent in addition to that provided by the flow of the noxious gas stream through the cyclone.

For a better understanding of the invention, reference will now be made, by way of exemplification only, to the accompanying drawings which:
Figure 1 is a schematic sectional view through a cyclone for use in a system of the invention.
Figure 2 is a diagrammatic representation of a vacuum pump system of the invention of the type shown in Figure 1 as also showing the relative dimensions therein.
Figure 3 shows a diagrammatic representation of a further system of the invention taken along the line III - III of Figure 2.
Figure 4 shows the diagrammatic representation of Figure 3 with the addition of means for introducing a liquid or solid cleansing agent.

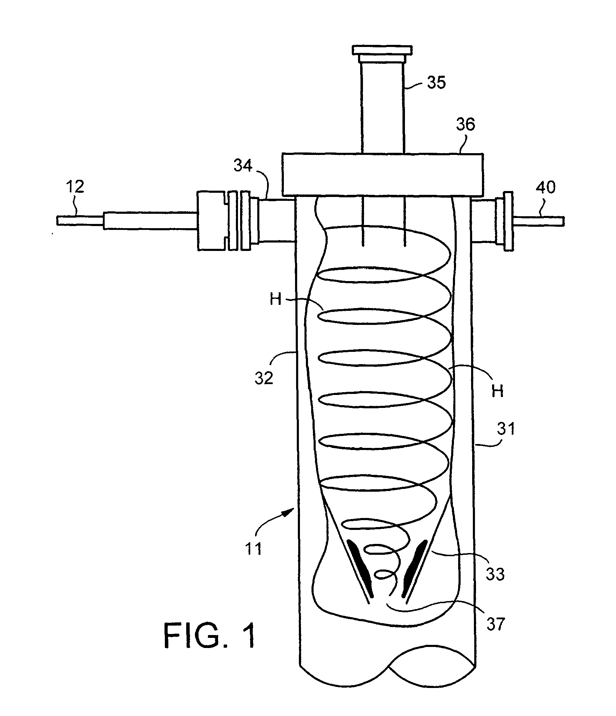

With reference to the drawings, there is shown in Figures 1, 2 and 3 a cyclone for a gas stream cleansing system of the invention which comprises a hollow cyclone body 31 having a cylindrical portion 32 and a conical portion 33. Gas from a noxious gas stream enters the cyclone via the cyclone inlet 34 tangentially to the cylindrical portion 32. The gas flow therefore tends to be in the form of a helix H in a general downward direction by virtue of the size and shape of the body 1, especially that of the cylindrical portion 32 and the conical portion 33 during which flow entrained particles tend to be urged by centrifugal forces against the side of the portions 32, 33.

A gas outlet 35 in the form of a tube set in to an upper wall 36 of the cyclone body 31, and extending downwardly therethrough in to the cylindrical portion 32, allows gas to exit the body 31 and a particle outlet 37 at the base of the conical portion 33 allows particles to exit the body 31 under gravitational force and be collected at the bottom of the body 31. A container (not shown) can conveniently be connected via a pipe and a valve to the outlet 37 of the cyclone 11. The container can be disengaged from the system and the valve is present to do this.

In accordance with the invention, the cyclone 11 includes means for introducing a dilluent gas via a tube 40 again set tangentially to the cylindrical portion 32. The diluent gas, for example air at a rate of 1000 l/min, can conveniently be air, for example from a radial blower.

If desired, more than one noxious gas stream may enter the cyclone through different inlets which, as with the inlet 34, are preferably also positioned tangentially with respect to the cylindrical portion 32.

In accordance with separate embodiments of the invention, the cyclone 11 has means for introducing a liquid or solid cleansing agent in to the cyclone.

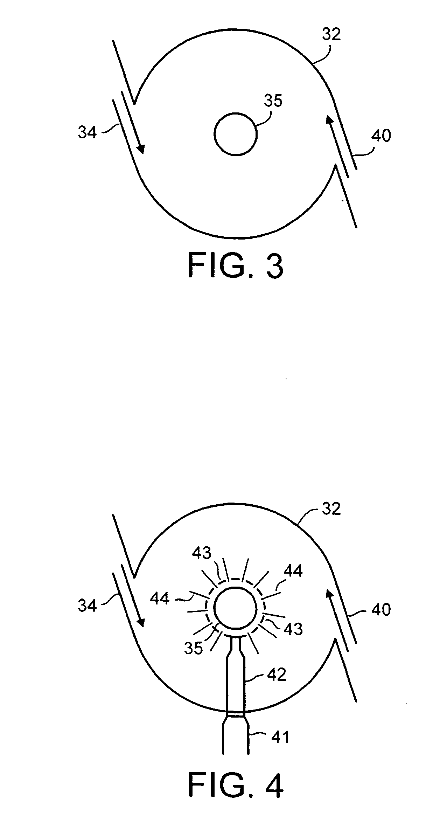

Figure 4 shows the presence of a further inlet 41 for this purpose. In the case of a liquid cleansing agent, the inlet 41 can conveniently have an extension 42 terminating in a spray head 43 at a central (axial) position about the downwardly extending part of the outlet 35 for the introduction in to the cyclone chamber of liquid in the form of a fine spray 44 of, for example, water. The spray may be omitted if a larger flow of liquid is required.

In the case of a solid cleansing material, the same type of tube 41 can be employed but without the extension 42 or the spray head 43 such that the solid material simply enters through a hole in the cyclone body 31. The solid material is preferably urged through the hole with a velocity in the general direction of the spinning gas helix (vortex).

The system shown in Figure 4 also preferably (but not necessarily) has the tube 40 present for the introduction of diluent gas together with the liquid or solid cleansing agent admitted via the tube 41.

In use of the system shown in Figure 4, gas flow entering the cyclone inlet 34 sets up a vortex gas flow within the body 31 in both the cylindrical portion 32 and moreover in the conical portion 33 in which entrained particles are urged against the wall of the body 31 and either remain on the wall or fall therefrom under gravitational forces towards the outlet 37. Gas exits the cyclone via the outlet 35. The liquid or solid cleansing agent introduced into the cyclone body 31 via the tube 40 generally dislodges accumulated particles adhering to the walls of the cyclone body 31.

It has been found that solid agents can remove most types of particles. In the case of liquid agents, these have to be selected for optimum effectiveness although water is generally useful and is inexpensive. Particles of silicon dioxide, for example, which are normally aquaphobic and are not readily entrained in water are surprisingly removed from the cyclone walls by being effectively admixed with the water and can be kept in aqueous suspension for a considerable time.

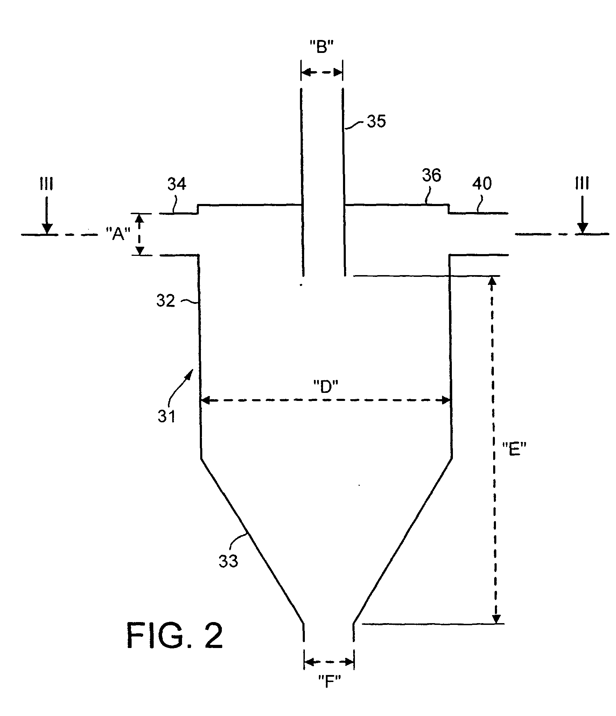

The relative dimensions of the cyclone components are important and advantageously the diameter A of the inlet 34 and the diameter B of the outlet 35 are both half that of the diameter D cylindrical portion 32. In addition it is preferred that the longitudinal length of E of the cylindrical portion 32 plus the conical portion 33 is twice or three times, for example 2.5 times, that of the diameter D of the cylindrical portion 32 The diameter F of the particle outlet 37 is preferably about 0.35 to 0.4, for example 0.375, times the diameter D of the cylindrical portion 32. These relative dimensions are shown in Figure 2.

## Claims

1. A method for cleansing a noxious gas stream with particles entrained therein, comprising:
conveying the gas stream to a cyclone to separate the gas from the particles, the cyclone comprising a hollow cyclone body (31) having a cylindrical portion (32) and a conical portion (33), the gas stream entering the cyclone via a cyclone inlet (34) tangentially to the cylindrical portion (32), and
introducing a diluent gas stream to the cyclone via a tube (40), the tube (40) being set tangentially to the cylindrical portion (32), and
collecting the particles separated from the diluted gas stream by the cyclone;
**characterised in that** the diluent gas stream is of a larger gas flow than the noxious gas stream entering the cyclone and the cyclone is operated , not by the noxious gas stream, but by the generally larger diluent gas flow.

2. A method according to Claim 1, wherein the gas streams enter the cyclone at opposing sides thereof.

3. A method according to Claim 1 in which the diluent gas is air or nitrogen.

4. A method according to any preceding claim in which the diluent gas reduces the concentration of the noxious gas in the gas stream to a concentration of less than 2%.

5. A method according to any one of Claims 1 to 3 in which the diluent gas reduces the concentration of the noxious gas in the gas stream to a concentration of 2% or more.

6. A method according to any preceding claim, wherein a liquid or a solid cleansing agent is introduced into the cyclone.

7. A method according to Claim 6 in which the cleansing agent is a liquid and is one or more of water, light oils, benzene, alcohols and organic solvents.

8. A method according to Claim 6 in which the cleansing agent is a solid.

9. A method according Claim 8, wherein the solid cleansing agent comprises one of glass beads, sand, metal shot and plastic shot.

## Patentansprüche

1. Verfahren zum Reinigen eines schädlichen Gasstroms mit darin mitgeführten Teilchen, das umfasst:
Befördern des Gasstroms zu einem Zyklon zum Abscheiden des Gases von den Teilchen, wobei das Zyklon einen hohlen Zyklonkörper (31) mit einem zylindrischen Teil (32) und einem konischen Teil (33) aufweist, und der Gasstrom in das Zyklon über einen Zykloneinlaß (34) eintritt, der tangential zum zylindrischen Teil (32) verläuft, und
Einleiten eines Verdünnungsgasstroms in das Zyklon durch ein Rohr (40), wobei das Rohr (40) tangential zum zylindrischen Teil (32) angeordnet ist, und
Sammeln der von dem Verdünnungsgasstrom durch das Zyklon abgeschiedenen Teilchen,
**dadurch gekennzeichnet, dass** der Verdünnungsgasstrom aus einem größeren Gasstrom als der in das Zyklon eintretende schädliche Gasstrom ist und das Zyklon nicht durch den schädlichen Gasstrom, sondern durch den generell größeren Verdünnungsgasstrom betrieben wird.

2. Verfahren nach Anspruch 1, wobei die Gasströme in das Zyklon an gegenüberliegenden Seiten desselben eintreten.

3. Verfahren nach Anspruch 1, wobei das Verdünnungsgas Luft oder Stickstoff ist.

4. Verfahren nach irgendeinem vorhergehenden Anspruch, wobei das Verdünnungsgas die Konzentration des schädlichen Gases in dem Gasstrom auf eine Konzentration von weniger als 2% verdünnt.

5. Verfahren nach einem der Ansprüche 1 bis 3, wobei das Verdünnungsgas die Konzentration des schädlichen Gases in dem Gasstrom auf eine Konzentration von 2% oder mehr verdünnt.

6. Verfahren nach irgendeinem vorhergehenden Anspruch, wobei ein flüssiges oder ein festes Reinigungsmittel in das Zyklon eingeleitet wird.

7. Verfahren nach Anspruch 6, wobei das Reinigungsmittel eine Flüssigkeit ist und aus einem oder mehr der Stoffe Wasser, Leichtöle, Benzol, Alkohole und organische Lösungsmittel besteht.

8. Verfahren nach Anspruch 6, wobei das Reinigungsmittel ein Feststoff ist.

9. Verfahren nach Anspruch 8, wobei das feste Reinigungsmittel einen der Stoffe Glaskügelchen, Sand, Metallgranulat und Kunststoffgranulat ist.

## Revendications

1. Procédé d'épuration d'un courant gazeux nocif dans lequel sont entraînées des particules, comprenant :
l'acheminement du courant gazeux jusqu'à un cyclone pour séparer le gaz des particules, le cyclone comprenant un corps de cyclone creux (31) ayant une portion cylindrique (32) et une portion conique (33), le courant gazeux entrant dans le cyclone par une entrée (34) du cyclone, tangentiellement à la portion cylindrique (32), et
l'introduction d'un courant de gaz diluant dans le cyclone par un tube (40), le tube (40) étant placé tangentiellement à la portion cylindrique (32), et
le recueil des particules séparées du courant de gaz dilué par le cyclone ;
***caractérisé en ce que*** le courant de gaz diluant est d'un écoulement gazeux plus important que le courant gazeux nocif entrant dans le cyclone, et le cyclone est actionné non par le courant gazeux nocif, mais par l'écoulement de gaz diluant globalement plus important.

2. Procédé selon la revendication 1, dans lequel les courants gazeux entrent dans le cyclone par des côtés opposés de celui-ci.

3. Procédé selon la revendication 1, dans lequel le gaz diluant est de l'air ou de l'azote.

4. Procédé selon l'une quelconque des revendications précédentes, dans lequel le gaz diluant réduit la concentration du gaz nocif dans le courant gazeux à une concentration inférieure à 2 %.

5. Procédé selon l'une quelconque des revendications 1 à 3, dans lequel le gaz diluant réduit la concentration du gaz nocif dans le courant gazeux à une concentration de 2 % ou plus.

6. Procédé selon l'une quelconque des revendications précédentes, dans lequel un agent nettoyant liquide ou solide est introduit dans le cyclone.

7. Procédé selon la revendication 6, dans lequel l'agent nettoyant est un liquide et est l'un ou plusieurs d'entre l'eau, les huiles légères, le benzène, les alcools et les solvants organiques.

8. Procédé selon la revendication 6, dans lequel l'agent nettoyant est un solide.

9. Procédé selon la revendication 8, dans lequel l'agent nettoyant solide comprend l'un d'entre des billes de verre, du sable, de la grenaille métallique et de la grenaille plastique.
